# EUROPÄISCHE PATENTANMELDUNG

(11) **EP 2 896 639 A1**
(43) Veröffentlichungstag der Anmeldung: **22.07.2015**
(21) Anmeldenummer: 14151310.1
(22) Anmeldetag: 15.01.2014
(51) Int. Cl.: C08G 18/77, C08G 18/79, C08G 18/62, C08G 18/20, C09D 175/04

(54) **Beschichtete metallisierte Oberflächen**

(71) Anmelder: BASF Coatings GmbH, 48165 Münster (DE)
(72) Erfinder: Kues, Jan-Bernd, 48165 Münster (DE); Dopp, Andreas, 48308 Senden (DE); Groenewolt, Matthijs, 48147 Münster (DE); Küsener, Simone, 59387 Ascheberg (DE); Renner, Sebastian, 48151 Münster (DE)

(57) **Zusammenfassung**

Die vorliegende Erfindung betrifft Substrate mit einer metallisierten Oberfläche und einer transparenten Beschichtung, dadurch gekennzeichnet, dass die transparente Beschichtung dadurch hergestellt worden ist, dass eine Beschichtungsmittelzusammensetzung (K) aufgebracht und gehärtet worden ist, die
(a) mindestens eine Polyhydroxylgruppenhaltige Komponente (A),
(b) mindestens eine Polyisocyanatgruppenhaltige Komponente (B) mit freien und/oder blockierten Isocyanatgruppen und
(c) mindestens einen phosphorhaltigen Katalysator (D) für die Vernetzung von Silangruppen

enthält, wobei ein oder mehrere Bestandteile des Beschichtungsmittels hydrolysierbare Silangruppen enthalten.
Gegenstand sind außerdem Verfahren zur Herstellung der Substrate sowie ihre Verwendung.

## Beschreibung

Die vorliegende Erfindung betrifft Substrate mit einer metallisierten Oberfläche und einer transparenten Beschichtung, ein Verfahren zu deren Herstellung sowie die Verwendung der Substrate.

Metallisierte Oberflächen zeigen eine stark zunehmende Bedeutung, da sich durch eine metallische Beschichtung von Werkstoffen oder Bauteilen die Vorteile des jeweiligen Materials, wie Gewicht, Kosten, Formgebung u.Ä., mit den Vorteilen von metallischen Schichten, wie Optik, Leitfähigkeit, Abschirmung gegen elektromagnetische Strahlung u.Ä., kombinieren lassen und sich so die Eigenschaften des Werkstoffs oder des Bauteils an die jeweiligen Anforderungen anpassen lassen.

Metallisierte Oberflächen, welche beispielsweise eine hochglänzende Chromoptik oder das Aussehen von Aluminium aufweisen, lassen sich bekanntermaßen durch galvanische Verchromung oder durch moderne Beschichtungstechnologien erzeugen. Beim Galvanisieren werden üblicherweise eine nasschemische Bekeimung einer Oberfläche eines Werkstoffs oder eines Bauteils und danach eine stromlose chemische Grundmetallisierung durchgeführt. Nachteilig beim Galvanisieren sind jedoch die hohe Anzahl von Prozessschritten und die damit verbundene aufwändige Entsorgung der verwendeten Chemikalien.

Die galvanische Verchromung wird daher zunehmend durch moderne Beschichtungstechnologien ersetzt, die eine metallisch-glänzende Oberfläche mittels moderner, umweltschonender Vakuumverfahren, wie z.B. dem sogenannten Plasma Vapor Deposition (PVD) oder dem sogenannten Chemical Vapor Deposition (CVD) Verfahren, erzeugen, wie dies beispielsweise in der DE 103 37 456 A1 beschrieben ist. Bei dieser Direktmetallisierung der Oberflächen erhält man metallisierte Oberflächen mit sehr homogenen Schichten, die dem Substrat ein sehr ansprechendes Erscheinungsbild verleihen und das Bauteil bzw. den Werkstoff wertvoller erscheinen lassen.

Ein Nachteil insbesondere dieser mittels direkter Metallisierung erhaltenen Oberflächen ist jedoch der mangelnde Schutz gegen Umwelteinflüsse und gegen mechanische Belastungen, wie z.B. Steinschlag oder Kratzer. Daher müssen diese metallischen Oberflächen mit einer transparenten Beschichtung überzogen werden, um den Kundenanforderungen je nach Verwendungszweck des Werkstoffs bzw. des Bauteils gerecht zu werden.

So beschreibt auch die DE 103 37 456 A1 die Beschichtung der metallisierten Oberflächen mit einem Klarlack, ohne jedoch auf die Zusammensetzung geeigneter Klarlacke näher einzugehen.

Ferner beschreibt die EP-B-1 490 203 ein Verfahren zur Herstellung von metallisierten Formteilen, bei dem auf eine lichtdurchlässige Kunststofffolie eine Metallschicht aufgetragen wird, auf diese metallisierte Seite der Folie anschließend eine Klebeschicht, ggf. eine bedruckte oder unbedruckte Kunststofffolie und ggf. danach entweder auf die Klebeschicht oder die Folie eine Dekorschicht aufgebracht werden, die Folie mit einem lichtdurchlässigen Kunststoff hinterspritzt und abschließend die Metallschicht teilweise entfernt wird. Die Dekorschicht wird dabei beispielsweise mittels Siebdruck eines lichtdurchlässigen Farbsystems erzeugt.

Die EP-B-0 736 074 beschreibt eine strahlenhärtbare Schutzlackierung, insbesondere für metallisierte Oberflächen, die mit mindestens ein Präpolymer mit mindestens zwei ethylenisch ungesättigten Doppelbindungen, mindestens ein kationisch härtendes Epoxidharz, mindestens ein Keton- oder Keton-/Formaldehyd-harz und mindestens einen Reaktivverdünner enthält. Diese strahlenhärtbare Schutzlackierung wird insbesondere für die Beschichtung von Compactdiscs eingesetzt.

Aus der WO 08/74491, WO 08/74490, der WO 08/74489, der WO09/077181 und der WO 10/149236 sind Beschichtungsmittel bekannt, die mindestens eine Polyhydroxylgruppenhaltige Verbindung (A), mindestens ein Polyisocyanat (B) mit freien oder blockierten Isocyanatgruppen und mit Silangruppen und/oder dessen Dimer und/oder Oligomer und mindestens einen Katalysator (D) für die Vernetzung der Silangruppen enthalten, wobei die eingesetzte, Isocyanatgruppen und Silangruppen enthaltende Verbindung (B) basiert auf bekannten Isocyanaten, bevorzugt auf den Biuret-Dimeren und Isocyanurat-Trimeren von Diisocyanaten, insbesondere von Hexamethylendiisocyanat. Diese Beschichtungsmittelzusammensetzungen weisen gegenüber herkömmlichen Polyurethan-Beschichtungsmitteln den Vorteil einer deutlich verbesserten Kratzfestigkeit bei gleichzeitig guter Witterungsbeständigkeit auf. Diese Beschichtungsmittel werden insbesondere als Klarlack auf einer pigmentierten Basislackschicht im Bereich der Automobilserienlackierung und im Bereich der Autoreparaturlackierung eingesetzt.

Schließlich beschreibt die nicht offengelegte europäische Patentanmeldung mit der Anmeldenummer EP12195235.2 Beschichtungsmittel, die mindestens eine Polyhydroxylgruppenhaltige Verbindung (A), mindestens ein Polyisocyanat (B) mit Silangruppen und mindestens ein Rheologiehilfsmittel auf Basis pyrogener Kieselsäure enthalten.

### Aufgabe

Aufgabe der vorliegenden Erfindung war es daher, metallisierte Oberflächen zur Verfügung zu stellen, die einen sehr guten Schutz gegen Umwelteinflüsse und gegen mechanische Belastungen, wie z.B. Steinschlag oder Kratzer, aufweisen. Außerdem sollten die resultierenden Beschichtungen einen sehr guten optischen Gesamteindruck aufweisen und dabei insbesondere die Spiegeloptik der metallisierten Oberflächen nicht beeinträchtigen. Die eingesetzten Beschichtungsmittel sollten daher einen guten Verlauf aufweisen und zu Beschichtungen mit einem sehr hohen Glanz führen. Daneben sollten die aufgebrachten Beschichtungsmittel eine gute Haftung auf der metallisierten Oberfläche aufweisen und möglichst auch bei niedrigen Temperaturen bis 80°C aushärtbar sein.

Die entsprechenden Substrate sollten außerdem in möglichst vielen, ganz unterschiedlichen Bereichen einsetzbar sein und dabei problemlos an die ganz unterschiedlichen Anforderungen des jeweiligen Anwendungszweckes angepasst werden können. Schließlich sollten die metallisierten Oberflächen einfach und sehr gut reproduzierbar herstellbar sein und während der Lackapplikation keine ökologischen Probleme bereiten.

### Lösung der Aufgabe

Im Lichte der obengenannten Aufgabenstellung wurden Substrate mit einer metallisierten Oberfläche und einer transparenten Beschichtung gefunden, die dadurch gekennzeichnet sind, dass die transparente Beschichtung dadurch hergestellt worden ist, dass eine Beschichtungsmittelzusammensetzung (K) aufgebracht und gehärtet worden ist, die
(a) mindestens eine Polyhydroxylgruppenhaltige Komponente (A),
(b) mindestens eine Polyisocyanatgruppenhaltige Komponente (B) mit freien und/oder blockierten Isocyanatgruppen und
(c) mindestens einen phosphorhaltigen Katalysator (D) für die Vernetzung von Silangruppen
enthält, wobei ein oder mehrere Bestandteile der Beschichtungsmittelzusammensetzung hydrolysierbare Silangruppen enthalten.

Es ist überraschend und war nicht vorhersehbar, dass durch die Verwendung einer Polyurethanbeschichtungsmittelzusammensetzung, bei der ein oder mehrere Bestandteile der Beschichtungsmittelzusammensetzung hydrolysierbare Silangruppen enthalten, metallisierte Oberflächen erhalten werden, die einen sehr guten Schutz gegen Umwelteinflüsse und gegen mechanische Belastungen, wie z.B. Steinschlag oder Kratzer, aufweisen. Außerdem weisen die resultierenden Beschichtungen einen sehr guten optischen Gesamteindruck auf und beeinträchtigen dabei insbesondere die Spiegeloptik der metallisierten Oberflächen nicht. Die eingesetzten Beschichtungsmittel weisen dabei einen guten Verlauf auf und führen zu Beschichtungen mit einem sehr hohen Glanz.

Daneben weisen die aufgebrachten Beschichtungsmittel eine gute Haftung auf der metallisierten Oberfläche auf und können auch bei niedrigen Temperaturen bis 80°C ausgehärtet werden. Die entsprechenden Substrate sind außerdem in möglichst vielen, ganz unterschiedlichen Bereichen einsetzbar und können dabei problemlos an die ganz unterschiedlichen Anforderungen des jeweiligen Anwendungszweckes angepasst werden. Schließlich sind die metallisierten Oberflächen einfach und sehr gut reproduzierbar herstellbar und bereiten während der Lackapplikation keine ökologischen Probleme.

### Beschreibung der Erfindung

### Das erfindungsgemäß eingesetzte Beschichtungsmittel (K)

Insbesondere handelt es sich bei den erfindungsgemäß eingesetzten Beschichtungsmitteln (K) um thermisch härtbare Beschichtungsmittel, also bevorzugt um Beschichtungsmittel, die im Wesentlichen frei sind von strahlenhärtbaren ungesättigten Verbindungen, insbesondere völlig frei sind von strahlenhärtbaren ungesättigten Verbindungen.

### Die Struktureinheiten mit hydrolysierbaren Silangruppen

Es ist erfindungswesentlich, dass ein oder mehrere Bestandteile des Beschichtungsmittels (K) hydrolysierbare Silangruppen enthalten. Diese hydrolysierbaren Silangruppen führen zum Aufbau des Si-O-Si Netzwerkes, welches in der endgehärteten Beschichtung im Allgemeinen statistisch verteilt ist, es also im Allgemeinen zu keiner gezielten Anreicherung oder Abreicherung des Si-O-Si Netzwerkes in bestimmten Bereichen der Beschichtung kommt.

Insbesondere kommen hier Beschichtungsmittel in Betracht, bei denen ein oder mehrere Bestandteile des Beschichtungsmittels zumindest teilweise
eine oder mehrere, gleiche oder verschiedene Struktureinheiten der Formel (I)

-N(X-SiR"x(OR')3-x)n(X'-SiR"y(OR')3-y)m (I)

wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n=0 bis 2, m=0 bis 2, m+n=2, sowie
x, y=0 bis 2,
und/oder
eine oder mehrere, gleiche oder verschiedene Struktureinheiten der Formel (II)

-Z-(X-SiR"x(OR')3-x) (II),

wobei
Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x = 0 bis 2, und
X, R', R" die bei Formel (I) angegebene Bedeutung haben,
aufweisen.

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy-Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist.

Die Struktureinheiten der Formeln (I) und (II) können auf unterschiedliche Arten in die Bestandteile des Beschichtungsmittels eingeführt werden. Gemeinsam ist den verschiedenen Arten jedoch, dass die Einführung der Struktureinheiten über eine Reaktion der funktionellen Gruppen der zu modifizierenden Bestandteile mit komplementären funktionellen Gruppen des Silans erfolgt. Beispielhaft seien daher im Folgenden verschiedenen Möglichkeiten zur Einführung der Struktureinheiten (I) bzw. (II) in die Hydroxyl- und ggf. noch weitere reaktive Gruppen aufweisende Verbindung (A) und/oder in die Isocyanatgruppen aufweisende Verbindung (B) aufgeführt.

Zum Einsatz, insbesondere im Rahmen von Michael - Additionen, kommen beispielsweise primäre Aminosilane, wie 3 - Aminopropyltriethoxysilan (erhältlich z.B. unter dem Markennamen Geniosil® GF 93 von der Fa. Wacker Chemie), 3 - Aminopropyltrimethoxysilan (erhältlich z.B. unter dem Markennamen Geniosil® GF 96 von der Fa. Wacker Chemie), N-(2-Aminoethyl)-3-aminopropyltrimethoxysilan (erhältlich z.B. unter dem Markennamen Geniosil® GF 9 sowie Geniosil® GF 91 von der Fa. Wacker Chemie), N-(2-Aminoethyl)-3-aminopropylmethyldimethoxysilan (erhältlich z.B. unter dem Markennamen Geniosil® GF 95 von der Fa. Wacker Chemie) u.Ä

Zum Einsatz, insbesondere im Rahmen von Additionen an Isocyanat - funktionelle Verbindungen, kommen beispielsweise sekundäre Aminobissilane, wie beispielsweise Bis-(2-trimethoxysilylethyl)amin, Bis-(2-tri-ethoxysilylethyl)amin, Bis (3-triethoxysilylpropyl)amin (erhältlich unter dem Handelsnamen Dynasylan® 1122 bei der Firma Degussa), Bis (3-trimethoxysilylpropyl)amin (erhältlich unter dem Handelsnamen Dynasylan® 1124 bei der Firma Degussa), Bis-(4-triethoxysilylbutyl)amin, und sekundäre N-Alkyl-substituierte Aminosilane, wie z.B. N-(n-butyl)-3-aminopropyltrimethoxysilan (erhältlich unter dem Handelsnamen Dynasylan® 1189 bei der Firma Degussa), N-(n-butyl)-3-aminopropyltriethoxy-silan, N-Cyclohexyl-3-aminopropyltrimethoxysilan (erhältlich unter dem Markennamen Geniosil® GF 92 von der Fa. Wacker Chemie), N-Cyclohexyl-3-aminopropyltriethoxysilan, N-Cyclohexylaminomethylmethyldiethoxysilan (erhältlich von der Fa. Wacker Chemie unter dem Handelsnamen Geniosil® XL924), N-Cyclohexylaminomethyltriethoxysilan (erhältlich von der Fa. Wacker Chemie unter dem Handelsnamen Geniosil® XL 926), N-Phenylaminomethyltrimethoxysilan (erhältlich von der Fa. Wacker Chemie unter dem Handelsnamen Geniosil® XL 973) u.Ä..

Epoxy - funktionelle Silane können insbesondere zur Addition an Carbonsäure- oder Anhydrid- funktionelle Verbindungen eingesetzt werden. Anhydrid - funktionelle Silane können insbesondere zur Addition an Epoxy-funktionelle Verbindungen eingesetzt werden. Derartige Silane können im Rahmen von Michael Reaktionen oder auch im Rahmen von metallkatalysierten Reaktionen eingesetzt werden.

Silane mit Isocyanatfunktion oder Carbamatfunktion kommen insbesondere zum Einsatz im Rahmen von Reaktionen mit Hydroxy-funktionellen Verbindungen. Beispiele für Silane mit Isocyanatfunktion sind beispielsweise in der WO07/037857, Seite 4, Abschnitte [0014] und [0015] beschrieben.

### Die Polyhydroxylgruppen-haltige Verbindung (A)

Als Polyhydroxylgruppen-haltige Verbindung (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen massenmittlere Molekulargewichte Mw > 500 Dalton, gemessen mittels Gelpermeationschromatographie (GPC) gegen einen Polystyrolstandard, bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2). Im Falle reiner Poly-(Meth)-Acrylate kann die OH-Zahl auch durch Berechnung auf Basis der eingesetzten OH-funktionellen Monomere ausreichend genau bestimmt werden.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C. Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Ganz besonders bevorzugt enthält die Komponente (A) ein oder mehrere Polyacrylatpolyole und/oder Polymethacrylatpolyole. Zusammen mit dem oder den Polyacrylatpolyolen und/oder Polymethacrylatpolyolen können weitere oligomere und/oder polymere Polyhydroxylgruppen-haltige Verbindungen, beispielsweise Polyesterpolyole, Polyurethanpolyole und Polysiloxanpolyole, insbesondere Polyesterpolyole, eingesetzt werden.

Die erfindungsgemäß ganz besonders bevorzugten Poly(meth)acrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -60 und < 20 °C (gemessen mittels DSC-Messungen nach DIN-EN-ISO 11357-2).

Die Poly(meth)acrylatpolyole weisen bevorzugt eine OH-Zahl von 60 bis 300 mg KOH/g, insbesondere zwischen 70 und 200 KOH/g, sowie eine Säurezahl zwischen 0 und 30 mg KOH/g auf.

Die Hydroxylzahl (OH-Zahl) wird wie oben beschrieben bestimmt (DIN 53240-2). Die Säurezahl gibt hierbei die Anzahl der mg Kaliumhydroxid an, die zur Neutralisation von 1 g der jeweiligen Verbindung verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Auch durch die Auswahl der hydroxylgruppenhaltigen Bindemittel können die Eigenschaften der endgehärteten Beschichtung beeinflusst werden. Im Allgemeinen kann nämlich mit steigender OH-Zahl der Komponente (A) der Silanisierungsgrad, d.h. die Menge Struktureinheiten der Formel (I) bzw. (II) bzw. (III), erniedrigt werden, was wiederum einen positiven Einfluss auf die Witterungsbeständigkeit der endgehärteten Beschichtung zur Folge hat.

Struktureinheiten der Formel (I) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (la)

HN(X-SiR"x(OR')3-x)n(X'-SiR"y(OR')3-y)m (Ia),

eingeführt werden, wobei die Substituenten die obengenannte Bedeutung haben. Zur Umsetzung des Polyols mit der Verbindung (la) weist dieses entsprechend weitere funktionelle Gruppen auf, welche mit der sekundären Aminogruppe der Verbindung (la) reagieren, wie insbesondere Säure- oder Epoxygruppen.

Monomerbausteine, die die Strukturelemente (I) tragen, sind vorzugsweise Umsetzungsprodukte der Acryl- und/oder der Methacrylsäure oder von epoxygruppenhaltigen Alkylacrylaten und/oder -methacrylaten mit den oben genannten Verbindungen (la).

Struktureinheiten der Formel (II) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIa)

H-Z-(X-SiR"x(OR')3-x) (IIa),

eingeführt werden, wobei die Substituenten die obengenannte Bedeutung haben. Zur Umsetzung des Polyols mit der Verbindung (IIa) weist dieses entsprechend weitere funktionelle Gruppen auf, welche mit der funktionellen Gruppe -ZH der Verbindung (IIa) reagieren, wie insbesondere Säure-, Epoxy- oder Estergruppen. Erfindungsgemäß bevorzugte Verbindungen (IIa) sind omega-Aminoalkyl- oder omega-Hydroxyalkyltrialkoxysilane.

### Hydroxylgruppenhaltige Verbindungen (C)

Die erfindungsgemäßen Beschichtungsmittelzusammensetzungen können ggf. außer der Polyhydroxylgruppen-haltigen Komponente (A) noch ein oder mehrere, von der Komponente (A) verschiedene, monomere hydroxylgruppenhaltige Verbindungen (C) enthalten. Bevorzugt nehmen diese Verbindungen (C) einen Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung, ein.

Als hydroxylgruppenhaltige Verbindung (C) werden niedermolekulare Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole in untergeordneten Anteilen der Polyolkomponente (A) beigemischt.

### Die Polyisocyanatgruppenhaltige Verbindung (B)

Als Komponente (B) enthalten die erfindungsgemäßen Beschichtungsmittel eine oder mehrere Verbindungen mit freien, d.h. unblockierten, und/- oder blockierten Isocyanatgruppen. Bevorzugt enthalten die erfindungsgemäßen Beschichtungsmittel Verbindungen (B) mit freien Isocyanatgruppen. Die Isocyanatgruppen der isocyanatgruppenhaltigen Verbindungen (B) können aber auch in blockierter Form eingesetzt werden. Dies ist bevorzugt dann der Fall, wenn die erfindungsgemäßen Beschichtungsmittel als einkomponentige Systeme eingesetzt werden.

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3diisocyanat, Cyclohexan-1,4-diisocyanat, Methylcyclohexyldiiso-cyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate PI sind Hexamethylen-1,6-diisocyanat, Isophorondiisocyanat und 4,4'-Methylendicyclohexyldiisocyanat, oder Mischungen dieser Isocyanate und/oder ein oder mehrere durch Dimerisierung, Trimerisierung, Biuret-, Uretdion-, Allophanat- und/oder Isocyanurat-Bildung von einem solchen Isocyanat abgeleiteter Polyisocyanatgrundkörper. Insbesondere ist der Polyisocyanatgrundkörper 1,6-Hexamethylendiisocyanat, 1,6-Hexamethylendiisocyanatisocyanurat, 1,6-Hexamethylendiisocyanaturetdion, Isophorondiisocyanat, Isophorondiisocyanatisocyanurat oder eine Mischung aus zwei oder mehreren dieser Polyisocyanate, besonders bevorzugt 1,6-Hexamethylendiisocyanatisocyanurat.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

Die erfindungsgemäß ganz besonders bevorzugten, mit den Struktureinheiten (I) und/oder (II) funktionalisierten isocyanatgruppenhaltigen Verbindungen (B) werden bevorzugt durch Umsetzung der vorgenannten Di- und/oder Polyisocyanate mit den vorgenannten Verbindungen (la) und/oder (IIa) hergestellt. Die Umsetzung der isocyanatgruppenhaltigen Verbindungen (B) mit den Verbindungen (la) und/oder (IIa) erfolgt vorzugsweise in Inertgasatmosphäre bei Temperaturen von maximal 100 °C, bevorzugt von maximal 60 °C.

Bevorzugt sind in der Polyisocyanatgruppenhaltigen Komponente (B) zwischen 5 und 90 mol-%, insbesondere zwischen 10 und 80 mol-%, bevorzugt zwischen 20 und 70 mol-%, besonders bevorzugt zwischen 25 und 50 mol-% der ursprünglich in der Polyisocyanatgruppenhaltigen Komponente (B) vorhandenen Isocyanatgruppen zu Struktureinheiten (I) und/oder (II) umgesetzt worden.

Außerdem liegt in der Polyisocyanatgruppenhaltigen Komponente (B) der Gesamtgehalt an Struktureinheiten (II) zwischen 0 und 70 mol-%, bevorzugt zwischen 5 und 50 mol-%, jeweils bezogen auf die Gesamtheit der Struktureinheiten (I) plus (II), und der Gesamtgehalt an Struktureinheiten (I) zwischen 100 und 30 mol-%, bevorzugt zwischen 95 und 50 mol-%, jeweils bezogen auf die Gesamtheit der Struktureinheiten (I) plus (II).

Die freien Isocyanatgruppen der isocyanatgruppenhaltigen Verbindungen (B) können auch in blockierter Form eingesetzt werden. Dies ist bevorzugt dann der Fall, wenn die erfindungsgemäßen Beschichtungsmittel als einkomponentige Systeme eingesetzt werden. Zur Blockierung kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut geläufig. Bevorzugt werden Blockierungsmittel, wie sie in EP-A-0 626 888 und EP-A-0 692 007 beschrieben sind, eingesetzt. Beispielsweise können die Isocyanatgruppen mit substituierten Pyrazolen, insbesondere mit Alkylsubstituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B) mit 3,5-Dimethylpyrazol blockiert.

### Der Katalysator (D) für die Vernetzung der Silangruppen

Es ist erfindungswesentlich, dass als Katalysator (D) phosphorhaltige, insbesondere phosphor- und stickstoff-haltige Katalysatoren eingesetzt werden. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und -di-ester, eingesetzt.

Ganz besonders bevorzugt werden als Katalysator (D) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. Diazabicyclootan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten. Ganz besonders bevorzugt werden vor allem bei niedrigen Härtungstemperaturen von maximal 80°C zur Blockierung der Phosphorsäureester bicyclische Amine, insbesondere Diazabicyclootan (DABCO), eingesetzt.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt. Eine geringere Wirksamkeit des Katalysators kann dabei durch entsprechend höhere Einsatzmengen teilweise kompensiert werden.

Die erfindungsgemäßen Beschichtungsmittelzusammensetzungen können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt.

### Die Kombination der Komponenten (A), (B), ggf. (C), (D) sowie weitere Komponenten der Beschichtungsmittelzusammensetzungen

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die Polyhydroxylgruppen-haltige Verbindung (A) sowie weitere nachfolgend beschriebene Komponenten, mit einer weiteren Lackkomponente, enthaltend die Polyisocyanatgruppen-haltige Verbindung (B) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die Polyhydroxylgruppen-haltige Komponente (A) kann in einem geeigneten Lösemittel vorliegen. Geeignete Lösemittel sind solche, die eine ausreichende Löslichkeit der Polyhydroxylgruppen-haltigen Komponente ermöglichen.

Bevorzugt werden erfindungsgemäß Beschichtungsmittelzusammensetzungen eingesetzt, die von 20 bis 79,98 Gew.-%, bevorzugt von 30 bis 69,8 Gew.-%, jeweils bezogen auf den Bindemittelanteil der Beschichtungsmittelzusammensetzung, mindestens einer Polyhydroxylgruppen-haltigen Verbindung (A), insbesondere mindestens eines Polyhydroxylgruppen-haltigen Polyacrylates (A) und/oder mindestens eines Polyhydroxylgruppen-haltigen Polymethacrylates (A), enthalten.

Bevorzugt werden erfindungsgemäß Beschichtungsmittelzusammensetzungen eingesetzt, die von 79,98 bis 20 Gew.-%, bevorzugt von 69,8 bis 30 Gew.-%, jeweils bezogen auf den Bindemittelanteil der Beschichtungsmittelzusammensetzung, der Polyisocyanatgruppenhaltigen-Komponente (B) enthalten.

Bevorzugt enthalten die Beschichtungsmittelzusammensetzungen die Verbindungen (C) in einem Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung.

Die Gewichtsanteile des Polyols (A) und ggf. (C) und des Polyisocyanates (B) werden vorzugsweise solchermaßen gewählt, dass das molare Äquivalentverhältnis der Hydroxylgruppen der Polyhydroxylgruppen-haltigen Verbindung (A) plus ggf. (C) zu den Isocyanatgruppen der Komponente (B) zwischen 1:0,5 und 1:1,5, bevorzugt zwischen 1:0,8 und 1:1,2 besonders bevorzugt zwischen 1:0,9 und 1:1,1, liegt.

Die Polyhydroxylgruppen-haltigen Komponente (A), die Polyhydroxylkomponente (C) und/oder die Polyisocyanat-Komponente (B) können in einem geeigneten Lösemittel vorliegen.

Als Lösemittel (L) für die erfindungsgemäßen Beschichtungsmittel sind insbesondere solche geeignet, die im Beschichtungsmittel chemisch inert gegenüber den Verbindungen (A), (B) und ggf. (C) sind und die auch bei der Härtung des Beschichtungsmittels nicht mit (A), ggf. (C) und (B) reagieren. Beispiele für solche Lösemittel sind aliphatische und/oder aromatische Kohlenwasserstoffe wie Toluol, Xylol, Solventnaphta, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Das bzw. die Lösemittel werden in den erfindungsgemäßen Beschichtungsmittelzusammensetzungen bevorzugt in einer solchen Menge eingesetzt, dass der Bindemittelgehalt der Beschichtungsmittelzusammensetzung mindestens 50 Gew.-%, besonders bevorzugt mindestens 60 Gew.-% beträgt. Dabei ist zu berücksichtigen, dass im Allgemeinen mit höherem Festkörpergehalt die Viskosität der Beschichtungsmittelzusammensetzung zunimmt und der Verlauf der Beschichtungsmittelzusammensetzung und somit der optische Gesamteindruck der gehärteten Beschichtung schlechter wird.

Neben den Verbindungen (A), (B) und ggf. (C) können noch weitere Bindemittel (E) eingesetzt werden, welche vorzugsweise mit den Hydroxylgruppen des Poly(meth)acrylates (A) und/oder mit den freien Isocyanatgruppen der Verbindung (B) und/oder mit den Alkoxysilylgruppen der Verbindungen (B) reagieren und Netzwerkpunkte ausbilden können.

Beispielsweise sind als Komponente (E) Aminoplastharze und/oder Epoxydharze verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf den Bindemittelanteil der erfindungsgemäßen Beschichtungsmittelzusammensetzung, eingesetzt.

Die erfindungsgemäß eingesetzte Beschichtungsmittelzusammensetzung (K) enthält außerdem bevorzugt mindestens ein Rheologiehilfsmittel (R) Ganz besonders bevorzugt enthält die erfindungsgemäß eingesetzte Beschichtungsmittelzusammensetzung (K) mindestens ein Rheologiehilfsmittel (R) auf Basis pyrogener Kieselsäure.).

Die Rheologiehilfsmittel (R) auf der Basis pyrogener Kieselsäuren werden insbesondere durch Flammenhydrolyse von Siliciumhalogenverbindungen erhalten. Wie dem Fachmann bekannt ist, lassen sich dabei durch geeignete Reaktionsbedingungen bei der Flammhydrolyse und Oberflächenmodifikationen der Siliciumdioxid-Primärteilchen die Kenngrößen und damit auch die Eigenschaften der pyrogenen Kieselsäureteilchen gezielt variieren.

Erfindungsgemäß kann als Rheologiehilfsmittel (R) entweder mindestens ein Rheologiehilfsmittel (R1) auf der Basis hydrophiler Kieselsäuren oder mindestens ein Rheologiehilfsmittel (R2) auf der Basis hydrophober Kieselsäuren oder eine Mischung aus mindestens einem Rheologiehilfsmittel (R1) auf der Basis hydrophiler Kieselsäuren und mindestens einem Rheologiehilfsmittel (R2) auf der Basis hydrophober Kieselsäuren eingesetzt werden.

Die mittels Flammenhydrolyse hergestellte pyrogene Kieselsäure weist an ihrer Oberfläche verschiedene funktionelle Gruppen, insbesondere Silanolgruppen und Siloxangruppen, auf. Sie ist daher als solches hydrophil und kann ohne weitere Modifizierung seiner Oberfläche als Rheologiehilfsmittel (R1) eingesetzt werden, d.h. diese Rheologiehilfsmittel (R1) bestehen bevorzugt aus pyrogener Kieselsäure.

Es können auch pyrogene Kieselsäuren, deren Oberfläche mit monomeren oder oligomeren Verbindungen modifiziert ist, in den Beschichtungsmitteln eingesetzt werden. Eine Oberflächenmodifizierung erfolgt üblicherweise durch Anbindung der an der Kieselsäurenoberfläche befindlichen Gruppen, wie beispielsweise Silanolgruppen, an monomere oder oligomere Verbindungen. Diese monomeren oder oligomeren Verbindungen enthalten daher zumindest eine gegenüber den an der Teilchenoberfläche befindlichen Gruppen affine Gruppe. Die Anbindung kann beispielsweise durch kovalente Bindung, ionische Anbindung oder Physisorption erfolgen. Der nicht zur Anbindung an die Kieselsäurepartikeloberfläche benötigte Teil der monomeren oder oligomeren Verbindungen ragt vorzugsweise ganz oder teilweise in das die Partikel umgebende Medium.

Bevorzugt werden erfindungsgemäß jedoch zur Oberflächenmodifizierung monomere oder oligomere Verbindungen eingesetzt, die neben der gegenüber Silanolgruppen reaktiven Gruppe einen oder mehrere hydrophobe Reste aufweisen und so mit einer Hydrophobierung der Kieselsäurepartikel verbunden sind und daher zur Herstellung der Rheologiehilfsmitteln (R2) auf der Basis hydrophober Kieselsäuren dienen. Bevorzugt werden zur Modifizierung der Kieselsäure organofunktionelle Siliciumverbindungen mit mindestens einer Alkylgruppe mit 1 bis 50 C-Atomen, insbesondere mit 1 bis 10 C-Atomen, und mit mindestens einer hydrolysierbaren Gruppe bzw. mit mindestens einer OH- bzw. NH-Gruppe eingesetzt. Als Rheologiehilfsmittel (R2) auf der Basis hydrophober Kieselsäuren werden dabei besonders bevorzugt silanisierte, pyrogen hergestellten Kieselsäuren eingesetzt, die auf der Oberfläche fixierte Trimethylsilylgruppen und/oder Dimethylsilylgruppen und/der Monomethylsilylgruppen aufweisen.

Prinzipiell nimmt die rheologiesteuernde Wirkung sowohl der Rheologiehilfsmittel (R1) auf Basis hydrophiler Kieselsäure als auch die rheologiesteuernde Wirkung sowohl der Rheologiehilfsmittel (R2) auf Basis hydrophober Kieselsäure mit abnehmender Primärteilchengröße zu. Sowohl die erfindungsgemäß eingesetzten Rheologiehilfsmittel (R1) auf der Basis hydrophiler Kieselsäuren als auch die Rheologiehilfsmittel (R2) auf der Basis hydrophober Kieselsäuren weisen daher üblicherweise eine Primärteilchengröße von <50 nm auf.

In den erfindungsgemäßen Beschichtungsmittelzusammensetzungen werden daher bevorzugt sowohl Rheologiehilfsmittel (R1) auf Basis hydrophiler Kieselsäure als auch Rheologiehilfsmittel (R2) auf Basis hydrophober Kieselsäure mit einer inneren Oberfläche nach BET von mehr als 100 m²/g, insbesondere mit einer inneren Oberfläche nach BET von mehr als 200 m²/g eingesetzt.

Beispiele für geeignete Rheologiehilfsmitteln (R1) auf der Basis hydrophiler Kieselsäuren sind auch die im Handel erhältlichen üblichen und bekannten Produkte, die beispielsweise von der Firma Degussa Evonik unter der Marke Aerosil® 380, Aerosil® 300, Aerosil® 200, Aerosil® 150 und Aerosil® 130 oder von der Firma Wacker unter der Typenbezeichnung T 40 vertrieben werden, wobei insbesondere Aerosil® 380 eingesetzt wird.

Beispiele für Rheologiehilfsmitteln (R2) auf der Basis hydrophober Kieselsäuren sind übliche und bekannte Produkte, wie beispielsweise von der Firma Degussa Evonik unter der Marke Aerosil®, insbesondere Aerosil® R816, R711, 8200, R106, R972 , R974, R805, R812 oder R812S, oder der Firma Wacker unter der Marke oder Typenbezeichnung HDK, insbesondere HDK H 15, H 18, H 20, H 30 oder 2000, vertrieben.

Die Rheologiehilfsmittel (R) bzw. (R1) bzw. (R2) werden in dem Beschichtungsmittel vorzugsweise in zumindest einem Teil des Bindemittels (A) oder - falls mehrere verschiedene Bindemittel (A) in dem erfindungsgemäßen Beschichtungsmittel eingesetzt werden - in zumindest einem Teil mindestens eines Bindemittels (A) dispergiert eingesetzt.

Das Rheologiehilfsmittel (R) wird vorzugsweise in Anteilen von 0,01 bis 10 Gew.-%, besonders bevorzugt in Anteilen von 0,1 bis 5,0 Gew.-%, bezogen auf den Bindemittelanteil der erfindungsgemäßen Beschichtungsmittelzusammensetzung, eingesetzt. Werden zwei oder mehrere verschiedene Rheologiehilfsmittel (R) eingesetzt, so liegt die Gesamtmenge all dieser Rheologiehilfsmittel (R) zwischen 0,01 und 10 Gew.-%, besonders bevorzugt zwischen 0,1 und 5,0 Gew.-%, bezogen auf den Bindemittelanteil der erfindungsgemäßen Beschichtungsmittelzusammensetzung. Wird als Rheologiehilfsmittel (R) eine Mischung aus mindestens einem Rheologiehilfsmittel (R1) auf der Basis hydrophiler Kieselsäuren und mindestens einem Rheologiehilfsmittel (R2) auf der Basis hydrophober Kieselsäuren eingesetzt, so liegt die Gesamtmenge dieser Rheologiehilfsmittel (R1) plus (R2) zwischen 0,01 und 10 Gew.-%, besonders bevorzugt zwischen 0,1 und 5,0 Gew.-%, bezogen auf den Bindemittelanteil der erfindungsgemäßen Beschichtungsmittelzusammensetzung.

Darüber hinaus kann die Bindemittelmischung bzw. die erfindungsgemäß eingesetzte Beschichtungsmittelzusammensetzung (K) mindestens ein übliches und bekanntes, von den Komponenten (A), (B), (C), (D) und (R) verschiedenes Lackadditiv (F) in wirksamen Mengen, d.h. in Mengen vorzugsweise bis zu 30 Gew.-%, besonders bevorzugt bis zu 20 Gew.-% und insbesondere bis zu 10 Gew.-%, jeweils bezogen auf den Bindemittelanteil der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Besonders bevorzugt sind Beschichtungsmittelzusammensetzungen, die 30 bis 69,8 Gew.-%, bezogen auf den Bindemittelanteil der Beschichtungsmittelzusammensetzung, mindestens eines Polyhydroxylgruppen-haltigen Polyacrylates (A) und/oder mindestens eines Polyhydroxylgruppen-haltigen Polymethacrylates (A),
69,8 bis 30 Gew.-%, bezogen auf den Bindemittelanteil der Beschichtungsmittelzusammensetzung, der Polyisocyanatgruppen-haltigen Verbindung (B),
0 bis 10 Gew.-%, bezogen auf den Bindemittelanteil der Beschichtungsmittelzusammensetzung, der hydroxylgruppenhaltigen Komponente (C)
0,1 bis 10 Gew.-%, bezogen auf den Bindemittelanteil der erfindungsgemäßen Beschichtungsmittelzusammensetzung, mindestens eines Katalysators (D),
0,1 bis 5 Gew.-%, bezogen auf den Bindemittelanteil der erfindungsgemäßen Beschichtungsmittelzusammensetzung, mindestens eines Rheologiehilfsmittels (R) auf Basis pyrogene Kieselsäure,
0 bis 15 Gew.-%, bezogen auf den Bindemittelanteil der Beschichtungsmittelzusammensetzung, eines oder mehrerer Aminoplastharze und/oder eines oder mehrerer Tris-(Alkoxycarbonylamino)Triazine (E) und
0 bis 20 Gew.-%, bezogen auf den Bindemittelanteil der Beschichtungsmittelzusammensetzung, mindestens eines üblichen und bekannten Lackadditivs (F)
enthalten.

Der Bindemittelanteil der Beschichtungsmittelzusammensetzung wird vor der Vernetzung dadurch bestimmt, dass eine kleine Probe (P) der Beschichtungsmittelzusammensetzung eingewogen und daran anschließend der Festkörper bestimmt wird, indem für 60 Minuten bei 130°C getrocknet wird, abgekühlt wird und dann erneut gewogen wird. Der Rückstand entspricht dem Bindemittelanteil der Probe (P). Der Bindemittelanteil der Beschichtungsmittelzusammensetzung in Gew.-% ergibt sich dann entsprechend aus 100 multipliziert mit dem Quotient aus dem Gewicht des Rückstandes der Probe (P) nach Trocknung bei 130°C geteilt durch das Gewicht der Probe (P) vor der Trocknung.

Der Bindemittelanteil der einzelnen Komponenten (A) bzw. (B) bzw. (C) des Beschichtungsmittels wird analog dadurch bestimmt, dass eine kleine Probe (P) der jeweiligen Komponente (A) bzw. (B) bzw. (C) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe (P) nach Trocknung bei 130°C geteilt durch das Gewicht der jeweiligen Probe (P) vor der Trocknung.

In Abhängigkeit von der chemischen Zusammensetzung und dem spezifischen Aufbau der Metallschicht sowie der Zusammensetzung der Beschichtungsmittelzusammensetzung können die erfindungsgemäßen Substrate unterschiedliche Erscheinungsbilder aufweisen. Wie in der DE 103 37 456 A1 auf den Seiten 3 bis 7 beschrieben, kann die Metalloberfläche glänzend oder matt sein sowie verschiedene Farbtöne aufweisen, je nachdem wie die einzelnen Metallschichten gewählt werden. Ferner kann die gewünschte Optik, wie beispielsweise Oberflächenglanz und Oberflächenstruktur zusätzlich oder nur durch die entsprechende Mattierung oder Strukturierung des Beschichtungsmittels (K) eingestellt werden. Des Weiteren kann eine gewünschte farbige Metalloptik, welche allein durch die Metallisierung nicht erzielt werden kann, auch durch die entsprechende Pigmentierung des Beschichtungsmittels (K) erzeugt werden.

Die erfindungsgemäß eingesetzten Beschichtungsmittelzusammensetzungen können daher ggf. auch Pigmente, insbesondere transparente Pigmente, in üblichen Mengen, insbesondere in einer Menge von 0 bis 5,0 Gew.-%, bezogen auf den Bindemittelanteil der erfindungsgemäßen Beschichtungsmittelzusammensetzung, enthalten.

Der Glanzgrad sowie die die gewünschte Struktur der resultierenden Beschichtung können dabei in bekannter Weise durch Verwendung entsprechender Mattierungsmittel, Strukturmittel oder Mischungen von Mattierungs- und Strukturmittel(n) in üblichen Mengen, bevorzugt in einer Menge von 0 bis 20 Gew.-%, insbesondere 5 bis 10 Gew.-%, bezogen auf den Bindemittelanteil der erfindungsgemäßen Beschichtungsmittelzusammensetzung, eingestellt werden, wie dies beispielsweise in der EP-B-1 088 037, Seite 3, Abschnitt [0011], bis Seite 6, Abschnitt [0052] und der WO 2012/065828, Seite 8, Zeile 29, bis Seite 12, Zeile 14, beschrieben ist.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt 40 bis 190°C und insbesondere 50 bis 180°C, während einer Zeit von 1 min bis zu 10 h, bevorzugt 2 min bis 5 h und insbesondere 3 min bis 3h, wobei bei niedrigen Temperaturen auch längere Härtezeiten zur Anwendung kommen können. Für die Lackierung von Kunststoffteilen sowie die Lackierung von Holz oder anderen temperaturempfindlichen Substraten werden dabei üblicherweise niedrigere Temperaturen angewandt, die bevorzugt zwischen 20 und 80°C, insbesondere zwischen 20 und 60°C liegen.

Die transparente Beschichtung weist dabei bevorzugt eine Trockenfilmschichtdicke zwischen 10 und 60 µm, insbesondere 15 bis 50 µm, auf.

### Die Substrate mit metallisierter Oberfläche

Als Substrate kommen ganz unterschiedliche Werkstoffe in Betracht, wie beispielsweise metallische Materialien, Glas, Keramik, Holz, Gummi und bevorzugt Kunststoffe.

Die Kunststoffteile bestehen üblicherweise aus ASA, ABS, Polycarbonaten, Blends aus ASA und Polycarbonaten und Blends aus ABS und Polycarbonaten, bevorzugt mit einem Polycarbonatanteil > 40%, insbesondere > 50%, Polyamid, Polyethylen, Polypropylen, Polystyrol, thermoplastisches Polyurethan, Polyethylenterephthalat, Polymethylmethacrylaten oder schlagzäh modifizierte Polymethylmethacrylaten, insbesondere aus Polymethylmethacrylaten oder schlagzäh modifizierten Polymethylmethacrylaten. Beispiele für weitere geeignete Kunststoffe sind auch in der DE 103 37 456 A1, Seite 4, Abschnitt [0014] genannt.

Unter ASA werden dabei im Allgemeinen schlagzähmodifizierte Styrol/- Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen. Unter ABS werden dabei im Allgemeinen Acrylnitril/Butadien/Styrol - Polymerisate verstanden.

Die erfindungsgemäßen Substrate weisen eine metallisierte Oberfläche und eine transparente Beschichtung auf, wobei die transparente Beschichtung dadurch hergestellt worden ist, dass die zuvor beschriebene Beschichtungsmittelzusammensetzung (K) aufgebracht und gehärtet worden ist.

Die Metallisierung kann direkt, d.h. ohne Verwendung eines Haftvermittlers und ohne Verwendung eines Primers, d.h. mittels Direktmetallisierung, auf die Substratoberfläche aufgebracht werden. Bei Kunststoffsubstraten wird bevorzugt vor der Applikation der erfindungsgemäßen Beschichtungsmittel vorher ein Primer, üblicherweise in einer Schichtdicke von 5 bis 50 µm, insbesondere 15 bis 40 µm, aufgebracht, da so sehr glatte metallisierte Oberflächen erhalten werden können, die einen besonders guten optischen Eindruck gewährleisten.

Die Metallisierung kann dabei üblicherweise -je nach gewünschten Eigenschaften und je nach gewünschtem optischem Effekt - aus einer oder aus mehreren aufeinanderliegenden, gleichen oder unterschiedlichen, Metallschichten bestehen. Das Aufbringen von einzelnen Metallschichten mit einer definierten chemischen Zusammensetzung in Kombination mit der Applikation des Beschichtungsmittels (K) mit einer definierten Zusammensetzung eröffnet die Möglichkeit, ganz gezielt die Eigenschaften des Substrates einzustellen. So können physikalische Eigenschaften, wie Abriebbeständigkeit, Kratzfestigkeit, Witterungsbeständigkeit, Chemikalienbeständigkeit u.Ä., sowie optische Eigenschaften, wie Glanz, Struktur und Farbton, ganz gezielt eingestellt werden.

Die Metallisierung des Substrates erfolgt üblicherweise schrittweise, d.h. jede einzelne Metallschicht der aus einer oder mehreren aufeinanderliegenden gleichen oder unterschiedlichen Metallschichten bestehenden Metallbeschichtung wird nacheinander schichtweise abgeschieden. Dabei wird jeweils ein Metall, eine Metalllegierung oder eine metallkeramische Zusammensetzung von definierter chemischer Zusammensetzung schichtartig nacheinander abgeschieden, wobei sich die Zusammensetzung nach dem jeweiligen Anwendungszweck des beschichteten Substrates richtet, wie dies in der DE 103 37 456, Seite 4, Abschnitt [0019], bis Seite 5, Abschnitt [0023] beschrieben ist.

Besonders bevorzugt erfolgt die Metallisierung der Substratoberfläche mittels des sogenannten Plasma Vapor Deposition (PVD) Verfahrens. Dabei wird die Metallbeschichtung vorzugsweise durch Bedampfen, Sputtern oder Arc-Verdampfen, besonders bevorzugt durch Sputtern (Zerstäuben), aufgebracht. Beim Sputtern wird ein Edelgas ionisiert und mittels Magnetfeldunterstützung auf das abzuscheidende Material (= "Target", beispielsweise Metall, Metalllegierung oder metallkeramische Zusammensetzung) beschleunigt. Als Ionenquelle kommt ein Edelgasplasma zum Einsatz. Man unterscheidet zwischen dem sogenannten DC-Sputtern und dem RF Sputtern, je nachdem, ob das Plasma durch ein Gleichstromfeld (DC) oder ein Wechselstromfeld angeregt wird. Der Druck in der Prozesskammer liegt dabei üblicherweise zwischen 10⁻⁴ mbar und 10⁻¹ mbar. Durch den Beschuss des Targets mit den energiereichen Edelgasionen kommt es zur Zerstäubung der Oberfläche des Tagets. Die Substratoberfläche wird dann bei einer Temperatur von 20 bis 100 °C, insbesondere 30 bis 60 °C, mit dem Metall bzw. der Legierung oder der metallkeramischen Zusammensetzung bestäubt, wie dies beispielsweise in der DE 103 37 456 A1, Seite 6, Abschnitte [0025] bis Seite 7, Abschnitt [0039], beschrieben ist.

Insbesondere im Falle von Kunststoffsubstraten kann die Oberfläche vor der Direktmetallisierung mittels eines Plasmaverfahrens ggf. aktiviert werden, wodurch die Haftfestigkeit der Metallisierung erhöht wird. Die beiden Prozessschritte Aktivierung und Direktmetallisierung können dabei in einer einzigen Anlage hintereinander durchgeführt werden Die mittels des Plasmaverfahrens aktivierten Oberflächen bleiben für einige Stunden bis zu 5 Tagen aktiv, bevor sie der nachfolgenden Direktmetallisierung unterzogen werden.

Daneben ist es auch möglich, die Metallisierung der Substratoberfläche mittels des sogenannten Chemical Vapor Deposition (CVD) Verfahrens durchzuführen. Die abzuscheidende Komponente wird dabei erst während des Prozesses erzeugt. Mit Hilfe des CVD Verfahrens lassen sich Substrate mit zahlreichen Metallen beschichten, vorausgesetzt, die Substrate sind bei den hohen Prozesstemperaturen von im Allgemeinen 200 bis 2000°C stabil.

Die metallisierte Schicht besteht vorzugsweise aus Aluminium, Kupfer, Nickel, Chrom oder Legierungen dieser Metalle oder aus Edelstahl, insbesondere aus Aluminium. Im Falle mehrerer metallisierter Schichten können die einzelnen Schichten auch aus unterschiedlichen der genannten Metalle bzw. Legierungen bestehen. Die metallisierte Schicht bzw. die metallisierten Schichten weisen bevorzugt eine Gesamtschichtdicke von 50 bis 500 nm, insbesondere von 85 bis 120 nm, auf.

Schließlich ist es auch möglich, auf die Metallschicht zunächst eine Passivierung zur Verhinderung des Anlaufens aufzubringen, wobei die Passivierung in der Regel nasschemisch aufgebracht wird. Auf diese Passiverung wird dann anschließend die transparente Beschichtungsmittelzusammensetzung (K) aufgebracht und gehärtet.

Die erfindungsgemäßen metallisierten Substrate können in ganz unterschiedlichen Bereichen eingesetzt werden. So können sie beispielsweise zur Herstellung von Maschinenteilen und Maschinenzubehör, von Kraftfahrzeugteilen und Kraftfahrzeugzubehör, insbesondere im Kfz-Außenbereich, wie z:B. für Zierleisten, als Spiegel und Reflektoren, insbesondere von Lampen und Scheinwerfern, für Telekommunikationsgeräten, wie Handyschalen, Computergehäusen, Telefongehäusen, Schalter, Haushaltsgeräte, Armaturen, medizinische und kosmetische Geräte, Verpackungsartikel, Schmuck sowie von Gebrauchsgegenständen, wie Einkaufswagen, eingesetzt werden.

Die vorliegende Erfindung wird nun anhand von Beispielen näher erläutert.

### Beispiele

### Herstellbeispiel für das teilsilanisierte Isocyanat (B)

Wie in der WO 2009/077180 auf den Seiten 30 und 31 unter dem Punkt silanisierter Härter 2 beschrieben, wird aus 57,30 Gewichtsteilen (0,100 mol) trimerisiertem Hexamethyl-1,6-diisocyanat (Basonat® HI 100, Firma BASF S.E., Ludwigshafen), 62,70 Gewichtsteilen Solventnaphta® und einer Mischung aus 25,62 Gewichtsteilen (0,075 mol) Bis -[3 trimethoxysilyl- propyl] amin (Dynasylan® 1124, EVONIK, Rheinfelden) und 17,65 Gewichtsteilen (0,075 mol) N-[3-(trimethoxysilyl)-propyl]butylamin (Dynasilan® 1189, EVONIK, Rheinfelden) der silanisierte Härter hergestellt. Der mittels Titration ermittelte NCO-Wert entspricht dem theoretisch errechneten NCO-Wert von 6,38 Gew.-% (6,0 Gew.-% auf Festkörper). Der Umsetzungsgrad der Isocyanatgruppen beträgt 50 %. Das so erhaltene Gemisch weist einen theoretischen Festkörpergehalt von 61 Gew.-% auf.

### Herstellbeispiel für den Katalysator (D) auf Phosphorsäureester-Basis, umgesetzt mit DABCO

Wie in der WO 2009/077180 auf den Seiten 32 und 33 unter dem Punkt Katalysator auf DABCO-Basis beschrieben, wird aus 11,78 g (0,105 mol) 1,4-Diazabicyclo(2.2.2)octan [DABCO Crystal], 32,24 g (0,100 mol) Bis(2-Ethylhexyl)-phosphat, 10,00 g (0,100 mol) Methylisobutylketon und 20,00 g (0,226 mol) Ethylacetat der Katalysator hergestellt.

### Formulierung des Beschichtungsmittels (K) und des Beschichtungsmittels des Vergleichsbeispiels V1

Analog zum Beispiel der WO 2009/077180 auf Seite 33 werden die polyhydroxylgruppenhaltige Komponente A (Polyacrylat), Katalysator und Lösungsmittel kurz vor der Applikation mit dem oben beschriebenen teilsilanisierten Polyisocyanat (B) bzw. im Vergleichsbeispiel mit dem nicht silanisierten Polyisocyanat vereinigt und solange verrührt bis eine homogene Mischung entsteht.

Tabelle 1: Zusammensetzung des erfindungsgemäßen Beschichtungsmittels (K1) und des Beschichtungsmittels V1 des Vergleichsbeispiel in Gew.-Teilen und Gew.-%

| Komponente | Zusammensetzung (K1) in Gew.-Teilen | nicht flüchtiger Anteil von (K1) in Gew.-Teilen | Zusammensetzung (V1) in Gew.-Teilen | nicht flüchtiger Anteil von (V1) in Gew.-Teilen |
|---|---|---|---|---|
| Polyacrylatharz-Lösung(A) ¹⁾ | 32,94 | 17,26 | 32,94 | 17,26 |
| Butylacetat | 10,72 | 0 | 6,87 | 0 |
| Katalysator D ²⁾ | 0,28 | 0,28 | 0 | 0 |
| DBTL ³⁾ | 0 | 0 | 0,03 | 0,03 |
| Lichtschutzmittel ⁴⁾ | 0,8 | 0,8 | 0,8 | 0,8 |
| Verlaufsmittel ⁵⁾ | 0,1 | 0,1 | 0,1 | 0,1 |
| Rheologiehilfsmittel ⁶⁾ | 0,1 | 0,1 | 0,1 | 0,1 |
| | | | | |
| teilsilanisiertes Iso.cyanat B ⁷⁾ | 60,0 | 37,8 | | |
| HDI-Isocyanurat ⁸⁾ | | | 9,16 | 9,16 |

| | | | | |
|---|---|---|---|---|
| Erläuterungen zu Tabelle 1: ¹⁾ hydroxylgruppenhaltiges Polyacrylat mit einer OH-Zahl von 156 mgKOH/g, 52,40 ± 1,00 %ig in einem Lösemittelgemisch ²⁾ oben beschriebener Katalysator (D) auf Phosphorsäureester-Basis, umgesetzt mit DABCO ³⁾ Dibutylzinndilaurat ⁴⁾ handelsübliches Lichtschutzmittel ⁵⁾ handelsübliches Verlaufsmittel auf Basis eines Siloxans ⁶⁾ handelsübliches Rheologiehilfsmittel auf Basis pyrogener Kieselsäure ⁷⁾ oben beschriebenes teilsilanisiertes Isocyanat (B) ⁸⁾ hanelsübliches trimerisiertes Hexamethyl-1,6-diisocyanat mit einem NCO-Gehalt von 21,5 - 22,5 %, lösemittelfrei | | | | |

### Metallisiertes Substrat

Es werden aus dem Polycarbonat-Acrylnitril-Butadien-Styrol Granulat PC-ABS TS 65 der Firma Bayer Material Science werden Kunststoff-Platten hergestellt. Die Platten werden mit Isopropanol abgewischt und mit einem handelsüblichen 2K-Polyurethanprimer pneumatisch (Düse 1,3 mm) beschichtet. Danach wird die Beschichtung 5 - 10 Minuten bei Raumtemperatur abgelüftet und anschließend bei 80°C 60 Minuten gehärtet. Die Trockenfilmschichtdicke des Primers beträgt 20 µm. Auf der Primerschicht wird mit Hilfe des PVD Verfahrens eine Aluminiumschicht erzeugt.

### Herstellung der Beschichtungen

Auf die metallisierte Oberfläche wird direkt pneumatisch (Düse 1,3 mm) das Beschichtungsmittel (K) bzw. (V1) appliziert. Danach wird die Beschichtung 5 - 10 Minuten bei Raumtemperatur abgelüftet und anschließend bei 80°C 60 Minuten gehärtet. Die Trockenfilmschichtdicke der transparenten Beschichtung beträgt 20 µm.

Zunächst wurde der Glanz der resultierenden Beschichtungen bei 20° mit dem handelsüblichen Glanzgerät "micro-TRI-gloss" der Firma Byk Gardner bestimmt.

Die Kratzfestigkeit der Oberflächen der resultierenden Beschichtungen wurde mit Hilfe des Stahlwolle-Tests bestimmt. Hierzu wird mit Hilfe eines Hubarms auf einem beweglichen Schlitten und mit einem Auflagegewicht von 1,3 kg unter Verwendung von Stahlwolle (Grad 000) 25 Doppelhübe auf der zu prüfenden Beschichtung durchgeführt und anschließend der Restglanz bei 20° und 60° mit dem handelsüblichen Glanzgerät "micro-TRI-gloss" der Firma Byk Gardner bestimmt.

Außerdem wurde der sogenannte Kochtest durchgeführt: Ein mit VE-Wasser gefülltes Bad wird auf 70 - 80 °C gebracht. Die präparierten Substrate werden dann in das heiße Wasser für 2 Stunden getaucht. Nach 2 Stunden werden sie aus dem Wasser genommen und kurz zum Kühlen abgelegt. Danach wird ein Gitterschnitt entsprechend der Norm DIN EN ISO 2409 DE geritzt und die Haftung mit Tesa-Abriss getestet. Die Haftung ist bestanden, wenn der Gitterschnitt Gt < 2 ist.

Schließlich wurde die Witterungsstabilität mit Hilfe des Klimawechseltests entsprechend der VW Norm VW P-1200 vom Oktober 2004 (20 Tage, 1 h Regeneration) untersucht.

Die Prüfergebnisse sind in Tabelle 2 aufgeführt.

**Tabelle 2: Prüfergebnisse der resultierenden Beschichtungen**

| Beispiel | Beispiel 1 | Vergleichsbeispiel V1 |
|---|---|---|
| Glanz (20°) vor Belastung ¹⁾ | 85,2 | 87 |
| Glanz (20°) nach Belastung ²⁾ | 24,9 | 2,1 |
| Restglanz (20°) in % | 29,2 | 2,4 |
| Glanz (60°) vor Belastung ¹⁾ | 89,3 | 90,3 |
| Glanz (60°) nach Belastung ²⁾ | 46,2 | 11,1 |
| Restglanz (60°) in % | 51,8 | 12,3 |
| | | |
| Gitterschnitt nach Kochtest 2h @ 70-80°C ³⁾ | Gt 0 | Gt 0 |
| Visuelle Beurteilung nach Kochtest 2h @ 70-80°C ³⁾ | Keine optische Veränderung | Keine optische Veränderung |
| | | |
| Gitterschnitt nach Klimawechseltest ⁴⁾ | Gt 0 | Gt 0 |
| Visuelle Beurteilung nach Klimawechseltest ⁴⁾ | Keine optische Veränderung | Keine optische Veränderung |

| | | |
|---|---|---|
| Erläuterungen zu Tabelle 2: ¹⁾, ²⁾ gemessen mit Hilfe des "micro-TRI-gloss" Gerätes der Firma Byk Gardner vor bzw. nach dem Stahlwolle-Test ³⁾ Nach 20 Tagen dem Kochtest 2h @ 70-80°C erfolgte sowohl die visuelle Beurteilung der Beschichtung als auch die Haftungsprüfung mit Hilfe der Gitterschnittprüfung. ⁴⁾ Nach 20 Tagen Klimawechseltest und 1 h Regeneration erfolgte sowohl die visuelle Beurteilung der Beschichtung als auch die Haftungsprüfung mit Hilfe der Gitterschnittprüfung. | | |

## Patentansprüche

1. Substrat mit einer metallisierten Oberfläche und einer transparenten Beschichtung, **dadurch gekennzeichnet, dass** die transparente Beschichtung dadurch hergestellt worden ist, dass eine Beschichtungsmittelzusammensetzung (K) aufgebracht und gehärtet worden ist, die
(a) mindestens eine Polyhydroxylgruppenhaltige Komponente (A),
(b) mindestens eine Polyisocyanatgruppenhaltige Komponente (B) mit freien und/oder blockierten Isocyanatgruppen und
(c) mindestens einen phosphorhaltigen Katalysator (D) für die Vernetzung von Silangruppen
enthält, wobei ein oder mehrere Bestandteile der Beschichtungsmittelzusammensetzung hydrolysierbare Silangruppen enthalten.

2. Substrat nach Anspruch 1, **dadurch gekennzeichnet, dass** die Metallisierung der Substratoberfläche mittels eines PVD-Verfahrens oder eines CVD-Verfahrens erfolgt ist.

3. Substrat nach Anspruch 1 oder 2, **dadurch gekennzeichnet, dass** die metallisierte Oberfläche aus einer oder mehreren aufeinanderliegenden gleichen oder unterschiedlichen Metallschichten besteht.

4. Substrat nach einem der Ansprüche 1 bis 3, **dadurch gekennzeichnet, dass** die Metallschicht aus Aluminium, Kupfer, Nickel, Chrom oder Legierungen dieser Metalle oder aus Edelstahl besteht.

5. Substrat nach einem der Ansprüche 1 bis 4, **dadurch gekennzeichnet, dass** die Beschichtungsmittelzusammensetzung (K) entweder direkt auf die metallisierte Oberfläche aufgebracht und gehärtet worden ist oder dass zunächst eine Passivierungsschicht auf die metallisierte Oberfläche aufgebracht und auf diese Passivierungsschicht dann die Beschichtungsmittelzusammensetzung (K) aufgebracht und gehärtet worden ist.

6. Substrat nach einem der Ansprüche 1 bis 5, **dadurch gekennzeichnet, dass** der Katalysator (D) oder die Katalysatoren (D) der Beschichtungsmittezusammensetzung (K) ausgewählt ist bzw. sind aus der Gruppe der substituierten Phosphonsäurediester und/oder Diphosphonsäurediester, der substituierten Phosphorsäuremonoester und/oder Phosphorsäurediester, vorzugsweise aus der Gruppe, bestehend aus acyclischen Phosphorsäurediestern und/oder cyclischen Phosphorsäurediestern, und/oder der entsprechenden aminblockierten Phosphorsäureester.

7. Substrat nach einem der Ansprüche 1 bis 6, **dadurch gekennzeichnet, dass** ein oder mehrere Bestandteile des Beschichtungsmittels (K), bevorzugt die Polyisocyanatgruppenhaltige Komponente (B), mindestens eine Struktureinheit der Formel (I)
-N(X-SiR"x(OR')3-x)n(X'-SiR"y(OR')3-y)m (I)
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen, n = 0 bis 2, m = 0 bis 2, m+n = 2, sowie
x, y = 0 bis 2,
und/oder
eine oder mehrere, gleiche oder verschiedene Struktureinheiten der Formel (II)
-Z-(X-SiR"x(OR')3-x) (II),
wobei
Z = -NH-, -NR-,-O-, mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x = 0 bis 2, und
X, R', R" die bei Formel (I) angegebene Bedeutung haben, aufweisen.

8. Substrat nach einem der Ansprüche 1 bis 7, **dadurch gekennzeichnet dass** in der Polyisocyanatgruppenhaltigen Komponente (B) zwischen 5 und 90 mol-%, insbesondere zwischen 10 und 80 mol-%, bevorzugt zwischen 20 und 70 mol-%, besonders bevorzugt zwischen 25 und 50 mol-%, der ursprünglich in der Polyisocyanatgruppenhaltigen Komponente (B) vorhandenen Isocyanatgruppen zu Struktureinheiten (I) und/oder (II) umgesetzt worden sind.

9. Substrat nach einem der Ansprüche 1 bis 8, **dadurch gekennzeichnet, dass** der Polyisocyanatgrundkörper ausgewählt ist aus der Gruppe 1,6-Hexamethylendiisocyanat, Isophorondiisocyanat, 4,4'-Methylendicyclohexyldiisocyanat oder Mischungen dieser Isocyanate und/oder einem oder mehreren durch Dimerisierung, Trimerisierung, Biuret-, Uretdion-, Allophanat- und/oder Isocyanurat-Bildung von einem solchen Isocyanat abgeleitetem Polyisocyanatgrundkörper, insbesondere dass der Polyisocyanatgrundkörper 1,6-Hexamethylendiisocyanat, 1,6-Hexamethylendiisocyanatisocyanurat, 1,6-Hexamethylendiisocyanaturetdion, Isophorondiisocyanat, Isophorondiisocyanatisocyanurat oder eine Mischung aus zwei oder mehreren dieser Polyisocyanate ist.

10. Substrat nach einem der Ansprüche 1 bis 9, **dadurch gekennzeichnet, dass** die Beschichtungsmittelzusammensetzung (K) mindestens ein Rheologiehilfsmittel (R) auf Basis pyrogener Kieselsäure enthält.

11. Substrat nach einem der Ansprüche 1 bis 10, **dadurch gekennzeichnet, dass** das Polyol (A) mindestens ein Poly(meth)acrylatpolyol enthält.

12. Substrat nach einem der Ansprüche 1 bis 11, **dadurch gekennzeichnet, dass** die Metallschicht bzw. die Metallschichten eine Gesamtschichtdicke von 50 bis 500 nm und/oder die transparente Beschichtung eine Gesamtschichtdicke von 10 bis 60 µm aufweist.

13. Substrat nach einem der Ansprüche 1 bis 12, **dadurch gekennzeichnet, dass** das Substrat ausgewählt ist der Gruppe umfassend metallische Materialien, Glas, Keramik, Kunststoffe, Holz und Gummi.

14. Verfahren zur Herstellung von Substraten mit metallisierter Oberfläche nach einem der Ansprüche 1 bis 13, bei dem
I. auf eine Substratoberfläche mindestens eine Metallschicht,
II. ggf. eine Passivierungsschicht auf die Metallschicht und anschließend
III. auf die letzte Metallschicht oder, falls in Stufe (II) eine Passivierungsschicht aufgebracht wurde, auf diese Passivierungsschicht eine Beschichtungsmittelzusammensetzung (K) aufgebracht und bei Temperaturen von 30 bis 200°C während einer Zeit von 1 min bis zu 10 h gehärtet wird,
**dadurch gekennzeichnet, dass** die Beschichtungsmittelzusammensetzung (K)
(a) mindestens eine Polyhydroxylgruppenhaltige Komponente (A),
(b) mindestens eine Polyisocyanatgruppenhaltige Komponente (B) mit freien und/oder blockierten Isocyanatgruppen und
(c) mindestens einen phosphorhaltigen Katalysator (D) für die Vernetzung von Silangruppen
enthält, wobei ein oder mehrere Bestandteile des Beschichtungsmittels hydrolysierbare Silangruppen enthalten.

15. Verwendung der Substrate nach einem der Ansprüche 1 bis 13 zur Herstellung von Maschinenteilen und Maschinenzubehör, von Kraftfahrzeugteilen und Kraftfahrzeugzubehör, Spiegeln, Reflektoren, Telekommunikationsgeräten, Haushaltsgeräten, Armaturen, medizinischen und kosmetischen Geräten, Verpackungsartikeln, Schmuck sowie von Gebrauchsgegenständen.
